# EUROPÄISCHE PATENTSCHRIFT

(11) **EP 1 141 682 B1**
(45) Veröffentlichungstag und Bekanntmachung des Hinweises auf die Patenterteilung: **13.04.2016**
(21) Anmeldenummer: 99966894.0
(22) Anmeldetag: 21.12.1999
(51) Int. Cl.: G01N 21/88

(54) **VERFAHREN UND VORRICHTUNG ZUR OBJEKTERKENNUNG**
METHOD AND DEVICE FOR OBJECT RECOGNITION
PROCEDE ET DISPOSITIF DE RECONNAISSANCE D'OBJET

(30) Priorität: 21.12.1998 DE 19860309
(43) Veröffentlichungstag der Anmeldung: 10.10.2001
(73) Patentinhaber: HOS Hottinger Systems GbR, 68219 Mannheim (DE)
(72) Erfinder: BEYERER, Jürgen, D-69234 Dielheim (DE); SEIRAFFI, Mohammed, Ali, D-68723 Schwetzingen (DE)
(74) Vertreter: Patent- und Rechtsanwälte Ullrich & Naumann
(86) Internationale Anmeldenummer: PCT/DE1999/004070
(87) Internationale Veröffentlichungsnummer: WO 2000/037926

(56) Entgegenhaltungen:
- EP-A- 0 356 680
- EP-A- 0 662 609
- EP-A- 0 840 107
- DE-C- 19 534 984
- US-A- 4 882 498
- US-A- 5 369 492
- PATENT ABSTRACTS OF JAPAN vol. 1999, no. 01, 29. Januar 1999 (1999-01-29) & JP 10 288517 A (HORIBA LTD), 27. Oktober 1998 (1998-10-27)

## Beschreibung

Die Erfindung betrifft ein Verfahren zur Fehlerdetektion an geschossenen Kernen oder Kernpaketen, wobei das Objekt von einer Lichtquelle beleuchtet und mittels einer Kamera aufgenommen bzw. detektiert wird und wobei die durch die Aufnahme gewonnenen Daten mittels Rechner verarbeitet und ggf. gespeichert werden.

Gattungsgemäß handelt es sich hier ganz allgemein um ein Verfahren zur Objekterkennung bzw. zur Fehlerdetektion an Werkstücken, wobei sich dieses Verfahren ganz besonders zur Fehlerdetektion an geschossenen Kernen oder Kernpaketen eignet. Insoweit bezieht sich die Erfindung unter anderem auch auf das Gebiet der Gießereitechnik.

Zum Gießen von Formstücken jedweder Art werden Gießereikerne oder -formen meist in getrennten Teilen hergestellt, zusammengeführt und miteinander zu einer Gußform bzw. zu einem Kernpaket verbunden. Diese Kernpakete werden dann zur Herstellung eines bspw. metallischen Werkstücks mit geschmolzenem Metall gefüllt, wobei in der Serienfertigung die mit geschmolzenem Metall zu füllenden Kernpakete hintereinander aufgereiht die Fertigungsstraße durchlaufen.

Dabei ist von ganz besonderer Bedeutung, daß die in die Kernpakete gegossenen Werkstücke eine äußerst lange Abkühlphase beanspruchen, die sich oftmals über mehrere Stunden hinweg erstreckt. Erst nach dieser Abkühlphase läßt sich das gegossene Werkstück bzw. Teil inspizieren. Folglich kann erst mehrere Stunden nach dem Guß und somit ebenfalls mehrere Stunden nach dem Kernschießen festgestellt werden, ob das in das Kernpaket gegossene Teil auch tatsächlich fehlerfrei ist.

Sollte ein fehlerhafter Kern verwendet worden sein, so läßt sich der dadurch beim Gießen entstehende Ausschuß erst Stunden nach Herstellung des Kerns feststellen. Sollte es sich dabei wiederum um einen systematischen, beispielsweise aufgrund eines Fehlers am Werkzeug wiederkehrenden Defekt am Kern handeln, so würde bis zur Erkennung des Defekts am gegossenen Teil stundenlang Ausschuß produziert werden. Die für diesen Ausschuß verantwortlichen defekten Kerne könnten - wie bereits zuvor erwähnt - auf Defekte im Werkzeug der Kernschießmaschine, aber auch auf unmittelbare Beschädigungen der Kerne bei deren Handhabung, beim Transport oder bei der Paketierung zurückzuführen sein. Jedenfalls ist es nicht vertretbar, Fehler und somit den Ausschuß erst nach erfolgtem Guß bzw. bei der Inspektion der bereits abgekühlten Gußteile feststellen zu können.

Darüber hinaus können Beschädigungen der Formstücke und/oder der Werkzeuge nicht nur im unmittelbaren Bereich der Schießeinrichtung stattfinden, sondern vielmehr auch bei einer beliebigen Handhabung von Formstück und/oder Werkzeug, beim Fördern, bei einer Bearbeitung der Formstücke, beim Reinigen der Werkzeuge und insbesondere auch beim Komplettieren der Formstücke zu einem wie auch immer gestalteten Formpaket.

Kern- und Maskenschießmaschinen der zuvor genannten Art sind seit vielen Jahrzehnten aus der Praxis bekannt. Lediglich beispielhaft wird hier auf die DE 31 48 461 C1 verwiesen, die eine Kern- und Maskenschießmaschine der Anmelderin offenbart.

Aus der DE 44 34 798 A1 ist ebenfalls eine Kern- und Maskenschießmaschine bekannt, bei der zumindest eine visuelle Kontrolle des Werkzeugs vorgesehen ist. Letztendlich ist die in der DE 44 34 798 A1 angesprochene visuelle Kontrolle nicht praktikabel, da nämlich insbesondere im Rahmen einer vollautomatischen Fertigung das Werkzeug nicht ständig beobachtet werden kann. Zur visuellen Kontrolle müßte eine Fachkraft das Werkzeug ständig, d.h. nach jedem Schuß, beobachten. Auch wenn man eine solche visuelle Beobachtung bzw. Kontrolle vornehmen würde, bliebe das Schicksal eines ausgestoßenen und weiter zu transportierenden, zu bearbeitenden oder zu einem Paket zu komplettierenden Kerns gänzlich offen, da nämlich auch bei der Manipulation oder Bearbeitung der Kerne, bei der Übergabe der Kerne oder gar bei der Paketierung der Kerne Defekte bzw. Beschädigungen auftreten können.

Die EP 0 662 609 A und die EP 0 461 395 A offenbaren Beleuchtungssysteme zur Anwendung in optischen Inspektionssystemen, z. B. zur Überprüfung von Leiterplatten.

Aus der DE 195 34 984 C1 ist bereits ein gattungsbildendes Verfahren bekannt, bei dem das Formstück bzw. der Kern unter anderem auch nach der Entnahme aus der Kernschießmaschine berührungslos vermessen wird. Dies erfolgt in vorteilhafter Weise mittels Kamera, wobei dort eine hinreichende Beleuchtung erforderlich ist. Versteckte Bereiche bzw. Hinterschneidungen lassen sich gemäß dem gattungsbildenden Verfahren nur dann inspizieren, wenn entweder mehrere Kameras zur Bildaufnahme und somit auch zur Fehlerdetektion verwendet werden oder wenn eine Kamera relativ zu dem zu untersuchenden Objekt bzw. Kern bewegt wird. Beide Varianten erfordern einen erheblichen apparativen Aufwand und sind daher bereits aus Kostengründen problematisch. Außerdem behindert die Vorkehrung mehrerer Kameras den unmittelbaren Bereich um den jeweiligen Kern und somit die dort zum Einsatz kommenden Manipulatoren.

Der vorliegenden Erfindung liegt daher die Aufgabe zugrunde, ein gattungsbildendes Verfahren zur Fehlerdetektion an geschossenen Kernen oder Kernpaketen derart auszugestalten und weiterzubilden, dass eine hinreichend gute Objekterkennung und Fehlerdetektion mit geringstmöglichem apparativem bzw. konstruktivem Aufwand möglich ist.

Das erfindungsgemäße Verfahren zur Objekterkennung löst die voranstehende Aufgabe durch die kennzeichnenden Merkmale des Patentanspruches 1. Dabei werden die unterschiedlichen Lichtquellen zeitlich nacheinander eingeschaltet (Zeitmultiplex) oder sind - bei kontinuierlichem Betrieb aller oder einzelner Lichtquellen - von unterschiedlicher Farbe (Farb-, Wellenlängenmultiplex). Außerdem sind Polarisationsmultiplexe bei entsprechend polarisiertem Licht möglich. Die Schatten können auf dem Objekt selbst, auf einer Unterlage, an einer Wand, auf einem Schirm oder dgl. durch entsprechende Anordnung der Lichtquellen und daraus resultierende Projektionen entstehen.

Erfindungsgemäß ist erkannt worden, dass auch irregulär gestaltete Objekte, so bspw. Objekte mit Hinterschneidungen, Nischen, Ausnehmungen, etc. mit einer einzigen Kamera hinsichtlich etwaiger Fehler detektiert werden können, sofern man eine ganz besondere Beleuchtung vornimmt. In Abweichung zu den bislang bekannten Verfahren der hier in Rede stehenden Art werden zur Beleuchtung des zu untersuchenden Objekts mindestens zwei Lichtquellen sequentiell oder farblich unterscheidbar verwendet, wobei die beiden Lichtquellen das Objekt aus unterschiedlichen Richtungen bzw. Winkeln - nacheinander oder in Gruppen - beleuchten, und zwar entsprechend der Geometrie des jeweiligen Objekts. Entsprechend der Anordnung der Lichtquelle zu dem jeweiligen Objekt wird ein Schatten eines Teils des Objekts auf die Unterlage oder auf andere Objektteile geworfen, so dass sich das Objekt mittels Schattenwurf "auseinanderziehen" bzw. "aufspannen" lässt. Mit anderen Worten werden durch geschickte Anordnung der Lichtquellen ansonsten mit einer einzigen Kamera nicht erkennbare Bereiche aus ihrer "versteckten" Position herausprojiziert und werden in Ergänzung zu den Konturen des Objekts als quasi zusätzliche Bildinformation aufgenommen. Kritische Bereiche, die hinsichtlich etwaiger Defekte besonders anfällig sind, lassen sich so besonders gut untersuchen und zum Zwecke einer solchen - optischen - Untersuchung durch geeignete Projektion sogar vergrößern, so dass eine zufriedenstellende Detektion abermals begünstigt ist.

In ganz besonders vorteilhafter Weise ist die Beleuchtung bzw. sind die Lichtquellen schaltbar, so bspw. durch elektronische Mittel oder mittels mechanischem Shutter. Auch lassen sich hierzu Leuchtstoffröhren ohne Elektroden verwenden.

Die hier in erfindungsgemäßer Weise gewählte Beleuchtung ist unempfindlich gegen Erschütterungen. Genauer gesagt beeinträchtigen Erschütterungen die Beleuchtungsqualität kaum, da das Objekt durch einen recht breiten Lichtkegel ausgeleuchtet wird. Die Kamera nimmt dagegen quasi punktförmig auf und lässt sich insoweit obendrein miniaturisieren.

Erfindungsgemäß werden 3-D-Bildinformationen zur Fehlerdetektion genutzt, nämlich unter Zugrundelegung der hier konkret beanspruchten Beleuchtung des Objekts.

In vorteilhafter Weise wird das Objekt durch drei bis fünf, Lichtquellen aus unterschiedlichen Richtungen bzw. Winkeln beleuchtet, wobei durch Zeit- oder Farbmultiplextechniken für jede Beleuchtungsrichtung separate Bilddaten aufgenommen werden. An dieser Stelle sei jedoch angemerkt, dass die Anzahl der erforderlichen Lichtquellen von der Komplexität des jeweiligen Objekts abhängt. Bei einfachen Geometrien wird man mit weniger Lichtquellen als bei komplizierten Geometrien auskommen.

Wie bereits zuvor erwähnt, dient eine einzige Kamera zur Aufnahme, wobei nacheinander am gleichen Objekt getätigte Aufnahmen aus einer vorgegebenen Position heraus erfolgen. Dabei ist es durchaus denkbar, daß verschiedene Aufnahmen bei unterschiedlichen Beleuchtungszuständen getätigt werden, um nämlich sukzessive unterschiedliche Bereiche des Objekts über dessen Schattenwurf detektieren zu können. Die Kamera ist dabei jedenfalls ortsfest angeordnet, so daß insoweit auch bei schmutziger Umgebung bzw. Schadatmosphäre ein hinreichender Schutz der Kamera realisierbar ist.

Dabei ist es von weiterem Vorteil, wenn die Kamera das Objekt von oben, frontal oder aus sonstigen Richtungen aufnimmt, und zwar stets unter dem gleichen Winkel zu dem Objekt. Wie bereits zuvor erwähnt, könnte die Kamera zumindest im Bereich des Objektivs gekapselt sein, um nämlich eine Beschädigung der Kamera bzw. des empfindlichen Objektivs wirksam vermeiden zu können.

Die Kapselung der Kamera könnte dabei grundsätzlich geschlossen sein und würde lediglich zur Bildaufnahme - im Bereich des Objektivs - geöffnet werden. Ein optimaler Schutz der Kamera wäre dadurch geschaffen.

Ein wesentlicher Bestandteil einer Vorrichtung zum Betreiben des erfindungsgemäßen Verfahrens ist der Rechner, der einerseits zur Steuerung von Beleuchtung und Kamera und andererseits zur Verarbeitung bzw. Aufbereitung und schließlich Speicherung der gewonnenen Daten dient. Dabei könnte es sich um einen handelsüblichen PC mit modernster Prozessortechnik und hinreichendem Arbeitsspeicher handeln.

Sinn und Zweck des erfindungsgemäßen Verfahrens ist selbstverständlich weniger die bloße Detektion von Fehlern, sondern vielmehr das Zurverfügungstellen von Steuerungsdaten für den Produktionsprozeß, so bspw. für das Kernschießen. So könnte im Falle der Erkennung eines "Schlechtteils" wirksam vermieden werden, dass ein bspw. schadhafter Kern zur Paketierung gelangt und durch seine Anwesenheit das gesamte Kernpaket als "Schlechtteil" qualifiziert. Insoweit ist es von ganz besonderem Vorteil, wenn der Rechner mit einer speicherprogrammierbaren Steuerung (SPS) kommuniziert, wobei zwischen dem Rechner und der speicherprogramierbaren Steuerung Prozess- und Ergebnissignale ausgetauscht werden. Eine Prozesssteuerung kann mit den gewonnenen und verarbeiteten sowie aufbereiteten Daten erfolgen.

In ganz besonders vorteilhafter Weise findet an den aufgenommenen Bildern bzw. an den diesbezüglichen Daten eine qualitative oder quantitative Bildverarbeitung statt. Vom Prinzip her werden dort die Aufnahmen der jeweiligen Objekte mit einem Referenzbild verglichen. Dieses Referenzbild wird aus einem Referenzdatensatz berechnet, der aus N-Bildern von als "gut" eingestuften Werkstücken besteht. Das Referenzbild entspricht dem statistischen Mittelwert der Einzelbilder des Datensatzes. Diese Vorgehensweise erlaubt eine Minderung des Einflusses der prozessinhärenten Variationsbandbreite von Gutteilen bei der Berechnung des Referenzbildes. Gleichzeitig kann das Ausamaß der Variationsbandbreite innerhalb der Gutklasse benutzt werden, um die Schwellwerte bei der anschließenden Fehlerdetektion geeignet festzulegen, um nämlich eine zu hohe Falschalarmwahrscheinlichkeit zu vermeiden.

Letztendlich findet hier ein Soll-Ist-Vergleich statt. Zum Zwecke dieses Vergleichs könnte ein Differenzbild erstellt werden, welches im Idealfall keinerlei Strukturen erkennen läßt, so bspw. insgesamt schwarz ausgefüllt ist. In einem solchen Fall läge eine vollständige Übereinstimmung zwischen dem Prüfbild und dem Referenzbild vor.

Im Konkreten könnte die Bildverarbeitung eine Grobkorrelation umfassen, nämlich einen groben Vergleich mit den Daten des Referenzbildes bzw. mit vorzugsweise als Grauwerte vorgebbaren Grenzwerten. Diese Grenzwerte könnten variabel gestaltet sein, nämlich vom Benutzer vorgegeben werden. Je Objekt können des weiteren mindestens zwei Bilder aufgenommen werden, die zur weiteren Verarbeitung aufaddiert oder voneinander subtrahiert werden.

In weiter vorteilhafter Weise umfasst die Bildverarbeitung eine automatische Lagekorrektur, die allfällige translatorische und rotatorische Positionierungenauigkeiten des aktuell zu untersuchenden Objekts gegenüber den Referenzdaten ausgleicht. Hierdurch erreicht man eine deutliche Steigerung der Empfindlichkeit des Systems bzgl. den gesuchten Defekten. Die Lagekorrektur kann anhand fester Marken am Werkstück selbst erfolgen, kann aber auch alleine anhand signifikanter Objektstrukturen mittels einer Korrelationstechnik durchgeführt werden.

Des weiteren könnte die Bildverarbeitung eine Helligkeitsanpassung zur Anpassung der Grauwerte der Aufnahme umfassen. Insoweit würde der Situation Rechnung getragen, dass gleiche Objekte unterschiedlich stark reflektieren können, wodurch sich unterschiedliche Messwerte ergeben. Auch dabei werden systemimmanente Fehler kompensiert.

Wie bereits zuvor erwähnt, könnte die Bildverarbeitung des weiteren eine Subtraktion mit ggf. Filterfunktionen umfassen. Diese Subtraktion dient zur Verstärkung und Hervorhebung der gesuchten Defekte. Die Filterfunktionen dienen zur Minderung von Störungen in den gewonnenen Daten, sofern dies aufgrund des Objektes möglich ist. Schließlich umfasst die Bildverarbeitung eine Fehlerdetektion und gemäß den voranstehenden Ausführungen bearbeiteten bzw. verarbeiteten Daten. Im Rahmen einer solchen Fehlerdetektion ist es von weiterem Vorteil, wenn die Detektionsempfindlichkeit für einen am Objekt auftretenden Fehler anhand eines vorgebbaren Schwellwertes frei definierbar ist. Insoweit lässt sich ein Grenzwert zur Unterscheidung zwischen Gutteil und Schlechtteil vorgeben.

In weiter vorteilhafter Weise werden die Daten einer Bildaufnahme reduziert, indem man nämlich ein besonderes Rol-Handling realisiert, nämlich nur Daten interessierender Bereiche (Region of Interest) weiterverarbeitet. Andere Daten sind dabei nicht von Interesse.

Im Konkreten könnten vorgebbare Bereiche des aufgenommenen Bildes extrahierbar oder eliminierbar sein. Zur Extraktion und/oder Elimination könnten wiederum Schwellwerte bzw. den Schwellwerten entsprechende Grauwerte vorgebbar sein, wobei die interessierenden Bereiche ohne weiteres auch über einen Monitor interaktiv markierbar sind. Zu Fehlern bzw. Schäden neigende Bereiche können dabei mit ganz besonderer Aufmerksamkeit untersucht werden, wobei sich die Datenmenge insgesamt reduzieren lässt. Eine individuelle Parametrierung der einzelnen Rol's führt zu einer weiteren Steigerung der Detektionsleistung.

Es gibt nun verschiedene Möglichkeiten, die Lehre der vorliegenden Erfindung in vorteilhafter Weise auszugestalten und weiterzubilden. Dazu ist einerseits auf die nebengeordneten Patentansprüche sowie auf die Unteransprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigen
- Fig. 1: in einer schematischen Darstellung eine Vorrichtung zur Durchführung des erfindungsgemäßen Verfahrens, wobei es sich hier um eine Vorrichtung zur Fehlerdetektion an geschossenen Kernen handelt und
- Fig. 2: in einer schematischen Darstellung die Funktionsweise der Vorrichtung zur Durchführung des erfindungsgemäßen Verfahrens.

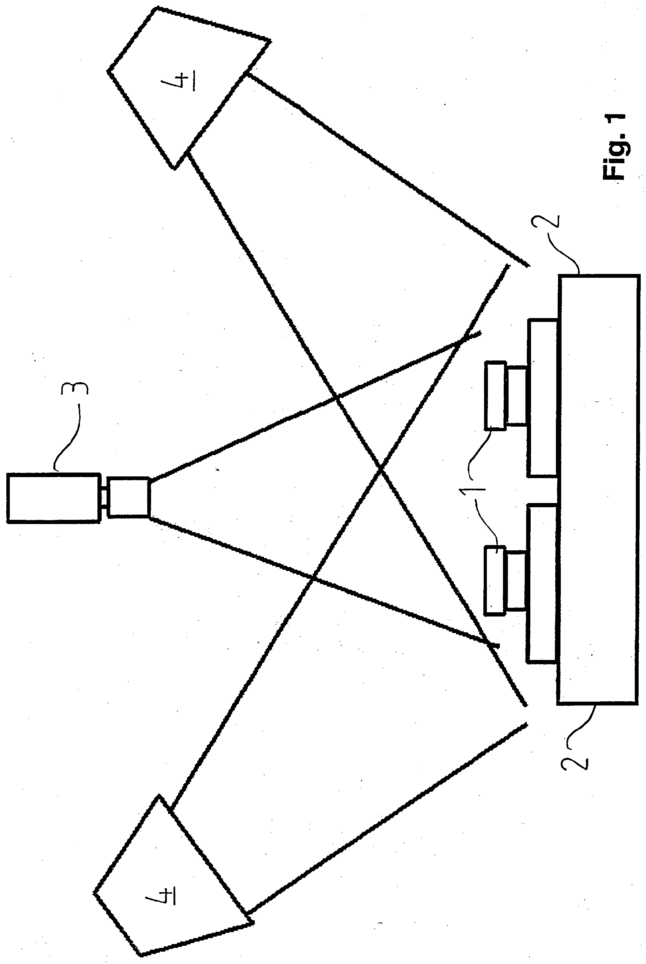

Bei dem in Fig. 1 gezeigten Ausführungsbeispiel handelt es sich um eine Vorrichtung zur Fehlerdetektion an geschossenen Kernen 1, wobei dort zwei Kerne 1 auf einer Unterlage 2 abgelegt sind. Bei der Unterlage 2 kann es sich um eine Transportpalette handeln.

Die Vorrichtung umfaßt eine Kamera 3 und zwei Lichtquellen 4, die die Kerne 1 aus unterschiedlichen Richtungen bzw. Winkeln beleuchten, so daß die Kamera 3 nicht nur die Kerne 1 entsprechend ihren Konturen, sondern auch durch die Lichtquellen 4 verursachte Schatten detektiert.

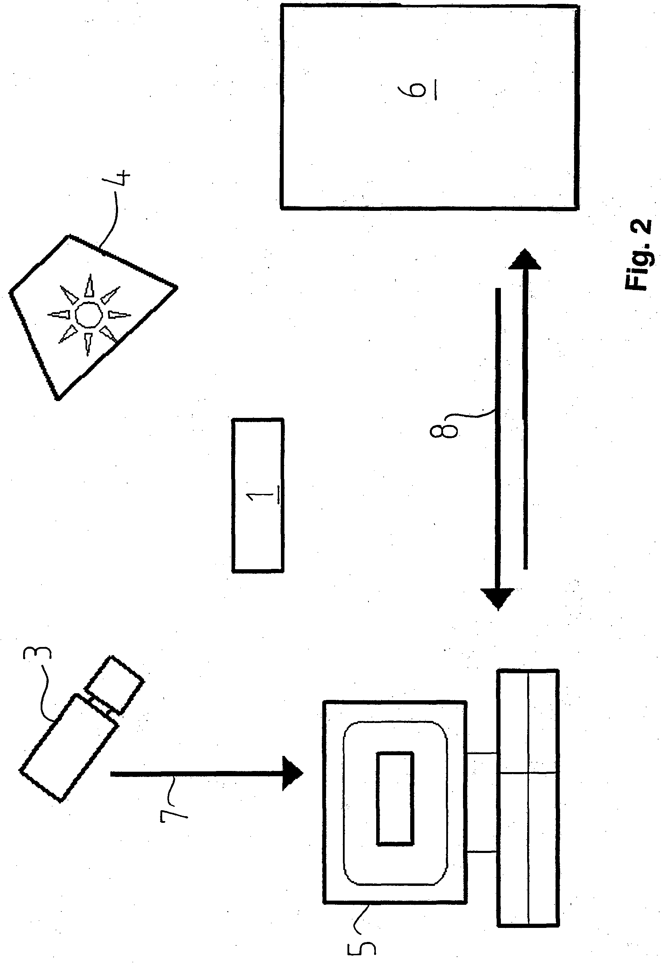

Gemäß der Darstellung in Fig. 2 dienen die Kamera 3 und die Lichtquelle 4 zur Bildaufnahme des Kerns 1, wobei die Kamera 3 und auch die Lichtquelle 4 über einen Prozessor gesteuert sein können. Im Konkreten ist hier ein PC 5 vorgesehen, der von der Kamera 3 die aufgenommenen Bilder 7 erhält. Bei dem in Fig. 2 gezeigten Ausführungsbeispiel ist des weiteren eine Prozeßsteuerung mittels SPS 6 vorgesehen, wobei die speicherprogrammierbare Steuerung (SPS) 6 mit dem PC 5 kommuniziert, nämlich Prozess- und Ergebnissignale 8 übermittelt.

Ergänzend sei angemerkt, dass durch mehr oder weniger geschickte Anordnung der Lichtquelle 4 ein entsprechender Schatten des Objekts bzw. des Kerns 1 entsteht. Die Länge der Schatten liefert Informationen bezüglich der z-Achse. Ein versteckter Bereich am Objekt kann somit regelrecht herausprojiziert werden, nämlich über dessen Schatten. Eine Überprüfung dieses Bereichs ist auch dann möglich, wenn die Kamera 3 in einer dazu eigentlich ungeeigneten Position angeordnet ist. Entsprechend der Projektion lassen sich auch bestimmte Bereiche des Objekts aus dem Blickwinkel der Kamera 3 indirekt inspizieren, die nicht direkt von Kamera 3 einsehbar sind.

Am Monitor des PC 5 lassen sich verschiedene Anzeigen bzw. Anzeige-Modi realisieren. Mehrere Benutzerebenen könnten eingerichtet werden. Für verschiedene Kerntypen könnte ein automatischer Programmwechsel vorgesehen sein, um nämlich die EDV-mäßigen Umrüstzeiten zu minimieren.

Des weiteren ist es denkbar, dass der PC 5 online mit einem Rechner der Wartungsfirma oder Herstellerfirma der gesamten Anlage verbunden ist. Insoweit könnte eine Wartung von der Ferne aus erfolgen.

Des weiteren ist wesentlich, dass die zuvor erörterte Methodik der Bildanalyse eine hohe Flexibilität der Detektion bzw. Auswertung liefert. Beliebige Bildmanipulationen sowie eine Reduktion der erforderlichen Daten ist möglich.

Schließlich sei noch angemerkt, dass die speicherprogrammierbare Steuerung (SPS) 6 sowohl Startsignal als auch Signale betreffend einen automatischen Programmwechsel an den PC 5 liefern könnte. Vom PC aus werden an die SPS 6 der Status oder Meßergebnisse betreffende Daten geliefert. Insoweit könnte die SPS 6 zu unmittelbaren Prozesssteuerungen im Rahmen eines übergeordneten Fertigungsprozesses verwendet werden.

Abschließend sei ganz besonders darauf hingewiesen, dass das zuvor erörterte Ausführungsbeispiel lediglich der Erörterung der beanspruchten Lehre dient, diese jedoch nicht auf das Ausführungsbeispiel einschränkt.

## Patentansprüche

1. Verfahren zur Fehlerdetektion an geschossenen Kernen (1) oder Kernpaketen,
**dadurch gekennzeichnet, dass** der Kern (1) oder das Kernpaket von mindestens zwei Lichtquellen (4) sequentiell oder farblich unterscheidbar aus unterschiedlichen Richtungen bzw. Winkeln derart beleuchtet wird, dass ein Schatten zur Vergrößerung eines Bereichs des Kerns (1) oder Kernpakets entsteht, wobei eine Kamera (3) zur Aufnahme des beleuchteten Kerns (1) oder Kernpakets und des aus der Beleuchtung resultierenden Schattens vorgesehen ist, wobei die Kamera (3) ortsfest angeordnet ist und den Kern (1) oder das Kernpaket stets unter dem gleichen Winkel aufnimmt, wobei die durch die Aufnahme gewonnenen Daten mittels Rechner verarbeitet und gespeichert werden und wobei die den Schatten betreffenden Daten mit abgespeicherten Referenzdaten verglichen werden.

2. Verfahren nach Anspruch 1, **dadurch gekennzeichnet, dass** das Objekt durch drei bis fünf Lichtquellen (4) aus unterschiedlichen Richtungen bzw. Winkeln beleuchtet wird.

3. Verfahren nach einem der Ansprüche 1 oder 2, **dadurch gekennzeichnet, dass** die Kamera (3) das Objekt von oben, frontal oder unter einem beliebig vorgebbaren Winkel aufnimmt.

4. Verfahren nach einem der Ansprüche 1 bis 3, **dadurch gekennzeichnet, dass** die Kamera (3) zumindest im Bereich des Objektivs gekapselt ist, wobei die Kapselung der Kamera (3) zur Bildaufnahme vorzugsweise im Bereich des Objektivs öffenbar ist.

5. Verfahren nach einem der Ansprüche 1 bis 4, **dadurch gekennzeichnet, dass** als Rechner ein PC (5) verwendet wird, wobei zwischen dem Rechner und einer speicherprogrammierbaren Steuerung (SPS) (6) Prozess-und Ergebnissignale (8) ausgetauscht werden können.

6. Verfahren nach einem der Ansprüche 1 bis 5, **dadurch gekennzeichnet, dass** an den aufgenommenen Bildern (7) bzw. an den diesbezüglichen Daten eine qualitative oder quantitative Bildauswertung stattfindet.

7. Verfahren nach einem der Ansprüche 1 bis 6, **dadurch gekennzeichnet, dass** ein Soll-Ist-Vergleich vorgenommen wird.

8. Verfahren nach Anspruch 6 oder 7, **dadurch gekennzeichnet, dass** die Bildverarbeitung eine Grobkorrelation, nämlich einen groben Vergleich mit den Daten -des Referenzbildes (Referenzdaten), umfasst und/oder dass mindestens zwei Bilder (7) aufgenommen werden, die einer weiteren Verarbeitung zugeführt werden und/oder dass die Bildverarbeitung eine Lagekorrektur umfasst, wobei zur Lagekorrektur des aufgenommenen Bildes (7) Referenzmarkierungen aufgenommen werden können, es sich bei den Referenzmarkierungen um Linien und/oder Punkte auf der Unterlage (2) handeln kann und wobei die Bildverarbeitung eine Helligkeitsanpassung zur Anpassung der Grauwerte der Aufnahme umfassen kann.

9. Verfahren nach einem der Ansprüche 1 bis 8, **dadurch gekennzeichnet, dass** die Bildverarbeitung eine Subtraktion mit ggf. Filterfunktionen und/oder eine Fehlerdetektion umfasst, wobei ein Fehler am Objekt anhand vorgebbarer Parameter definierbar sein kann.

10. Verfahren nach einem der Ansprüche 1 bis 9, **dadurch gekennzeichnet, dass** vorgebbare Bereiche des aufgenommenen Bildes extrahierbar sind und /oder dass störende Bereiche des aufgenommenen Bildes (7) eliminierbar sind, wobei zur Extraktion und/oder Elimination Schwellwerte bzw. den Schwellwerten entsprechende Grauwerte vorgebbar sind und diese vorzugsweise automatisch bestimmbar sein können.

## Claims

1. Method for detecting faults in shot cores (1) or core packages,
**characterised in that** the core (1) or the core package is illuminated from different directions or angles by at least two light sources (4), distinguishable either by sequence or colour, such that a shadow is created to magnify a region of the core (1) or core package, wherein a camera (3) is provided to record the illuminated core (1) or core package and the shadow resulting from the illumination, wherein the camera (3) is arranged to be fixed in place and always records the core (1) or the core package at the same angle, wherein the data gathered by the recording are processed and stored by computer and wherein the data concerning the shadow are compared with stored reference data.

2. Method according to claim 1, **characterised in that** the object is illuminated by three to five light sources (4) from different directions or angles.

3. Method according to one of the claims 1 or 2, **characterised in that** the camera (3) records the object from above, frontally or at any predeterminable angle.

4. Method according to one of the claims 1 to 3, **characterised in that** the camera (3) is encapsulated at least in the region of the objective wherein the encapsulation of the camera (3) can be opened to take photographs preferably in the region of the objective.

5. Method according to one of the claims 1 to 4, **characterised in that** a PC (5) is used as the computer wherein process and results signals (8) can be exchanged between the computer and a stored programme controller (SPC) (6).

6. Method according to one of the claims 1 to 5, **characterised in that** a qualitative or quantitative image evaluation takes place on the recorded images (7) or, respectively, on the data concerning them.

7. Method according to one of the claims 1 to 6, **characterised in that** a comparison is performed between target and actual.

8. Method according to claim 6 or 7, **characterised in that** the image processing comprises a rough correlation, that is, a rough comparison with the data of the reference image (reference data) and/or that at least two images (7) are recorded which are passed on for further processing and/or that the image processing comprises a position correction wherein, in order to correct the position of the recorded image (7), reference markings can be recorded which can involve lines and/or points on the base (2) and wherein the image processing can comprise adjusting the brightness to match the grey tones of the image.

9. Method according to one of the claims 1 to 8, **characterised in that** the image processing comprises a subtraction with, optionally, filter functions and/or fault detection wherein a fault can be defined on the object using predeterminable parameters.

10. Method according to one of the claims 1 to 9, **characterised in that** predeterminable regions of the recorded image can be extracted and /or the stored regions of the recorded image (7) can be eliminated wherein, in order to perform the extraction or elimination, threshold values or grey tones corresponding to the threshold values can be predetermined and, preferably, they can be determined automatically.

## Revendications

1. Procédé de détection de défauts sur des noyaux (1) ou paquets de noyaux injectés,
**caractérisé en ce que** le noyau (1) ou le paquet de noyaux est éclairé par au moins deux sources lumineuses (4) de façon séquentielle ou différentiable chromatiquement en provenance de directions ou respectivement d'angles différents de telle sorte qu'il en résulte une ombre destinée à agrandir une zone du noyau (1) ou paquet de noyaux, une caméra (3) étant prévue pour effectuer une prise de vue du noyau (1) ou paquet de noyaux éclairé et de l'ombre résultant de l'éclairage, la caméra (3) étant disposée de façon fixe et effectuant une prise de vue du noyau (1) ou du paquet de noyaux constamment sous le même angle, les données acquises par la prise de vue étant traitées au moyen d'ordinateurs et enregistrées, et les données concernant l'ombre étant comparées à des données de référence stockées.

2. Procédé selon la revendication 1, **caractérisé en ce que** l'objet est éclairé par trois à cinq sources lumineuses (4) à partir de directions ou respectivement d'angles différents.

3. Procédé selon l'une des revendications 1 ou 2, **caractérisé en ce que** la caméra (3) effectue une prise de vue de l'objet à partir du haut, frontalement ou bien selon un angle pouvant être fixé à l'avance arbitrairement.

4. Procédé selon l'une des revendications 1 à 3, **caractérisé en ce que** la caméra (3) est encapsulée au moins dans la zone de l'objectif, l'encapsulation de la caméra (3) pouvant être ouverte pour la prise de vue d'image de préférence dans la zone de l'objectif.

5. Procédé selon l'une des revendications 1 à 4, **caractérisé en ce qu'**un PC (5) est utilisé comme ordinateur, des signaux de process et de résultats (8) pouvant être échangés entre l'ordinateur et un automate programmable industriel (API) (6).

6. Procédé selon l'une des revendications 1 à 5, **caractérisé en ce qu'**une analyse d'images qualitative ou quantitative est effectuée sur les images (7) prises ou respectivement sur les données qui s'y rapportent.

7. Procédé selon l'une des revendications 1 à 6, **caractérisé en ce qu'**une comparaison théorique-effectif est entreprise.

8. Procédé selon la revendication 6 ou 7, **caractérisé en ce que** le traitement d'images comprend une corrélation grossière, à savoir une comparaison grossière avec les données de l'image de référence (données de référence) et/ou **en ce qu'**au moins deux images (7) sont prises qui sont conduites à un traitement complémentaire et/ou **en ce que** le traitement d'images comprend une correction de position, des repères de référence pouvant faire l'objet de prise de vue pour la correction de position de l'image (7) prise et où, concernant les repères de référence, il peut s'agir de lignes et/ou de points sur le support (2) et où le traitement d'images peut comprendre une adaptation de luminosité destinée à adapter les valeurs de gris de la prise de vue.

9. Procédé selon l'une des revendications 1 à 8, **caractérisé en ce que** le traitement d'images comprend une soustraction avec éventuellement des fonctions de filtrage et/ou une détection de défauts, un défaut pouvant être défini sur l'objet à l'aide de paramètres pouvant être fixés à l'avance.

10. Procédé selon l'une des revendications 1 à 9, **caractérisé en ce que** des zones de l'image prise qui peuvent être fixées à l'avance sont extractibles et/ou **en ce que** des zones gênantes de l'image (7) prise peuvent être éliminées, des valeurs de seuil ou respectivement des valeurs de gris correspondant aux valeurs de seuil pouvant être fixées à l'avance pour l'extraction et/ou l'élimination et pouvant de préférence être déterminées de façon automatique.
